# EUROPEAN PATENT APPLICATION

(11) **EP 4 531 274 A1**
(43) Date of publication of application: **02.04.2025**
(21) Application number: 23382995.1
(22) Date of filing: 29.09.2023
(51) Int. Cl.: H02S 20/32, F24S 30/425

(54) **COMPACT DRIVE FOR A SOLAR TRACKER, AND A SOLAR TRACKER INCLUDING SAID DRIVE**

(71) Applicant: Soltec Innovations S.L., 30500 Molina de Segura Murcia (ES)
(72) Inventor: Molina Cano, Alonso, 30500 Molina de Segura (ES)
(74) Representative: Isern Patentes y Marcas S.L.

(57) **Abstract**

The present invention comprises a casing (2) which houses the following components: a motor (3); a reduction system (4), with an input, connected to the motor (3), and an output connectable to a torsion element (7) of a solar tracker; electronics (10); and, preferably, a power supply (6); optionally, a positioning system to detect the angular position of the solar tracker. The casing (2) can be compartmentalised, wherein a first compartment (11) is occupied by the motor (3), a second compartment (12), separated from the first compartment (11), houses the electronics (10), preferably together with the power supply (6), and a third compartment (13) contains the reduction system (4). It simplifies manufacturing, in factory and on-site calibration, logistics, assembly and maintenance, as well as improving sustainability.

## Description

### Technical field of the invention

The present invention can be included within the field of solar energy, in particular, in that of solar trackers. More specifically, the object of the invention is a compact drive for a solar tracker.

### Background of the invention (state of the art)

In the solar energy sector in general and, in particular, for photovoltaic use, devices called "trackers" are known, which are driven by a drive, to rotate around a non-azimuth axis and, optionally, also around an azimuth axis, dragging one or more solar panels connected to the tracker in its rotation to provide the panels with a variable orientation throughout the day ("solar tracking") depending on the relative solar position (height and azimuth).

The aforementioned drive of a solar tracker traditionally includes the following components: a worm-crown reduction gear; a geared motor; and a tracker electronics. The aforementioned components are supplied independently, to be subsequently integrated on site, where the reduction gear and the geared motor are securely assembled in the solar tracker, and the electronics are assembled independently in different locations depending on the configuration of the tracker.

### Summarised description of the invention

The present invention presents a compact drive for a solar tracker, according to the attached independent claim, which has a more compact configuration than the drives of the state of the art referred to above. Other optional additional features are also indicated in dependent claims. In particular, the invention relates to a solar tracker that includes said drive.

The drive object of the present invention has a compact configuration, which integrates, in the same casing, both a reduction system, as well as its corresponding geared motor, and also the tracker electronics.

The compact configuration of the drive helps reduce duplication of elements such as bearings, joints, casings, etc. Likewise, it also allows the hardware for driving and positioning the tracker to be sent integrated and assembled from the factory, avoiding the need to assemble on site, where the means may be more limited. Furthermore, the compact configuration facilitates control of the solar tracker and measurement of the position (angle of rotation) on the drive itself, meaning that independent electronics assembled on the torque tube of the solar tracker are not required. Likewise, the need for cables between fixed assemblies (reduction gear and geared motor) and mobile assemblies (electronics) of the solar tracker is eliminated, since everything becomes a single assembly. In addition, the number of moving elements in the tracker is reduced (for example, fewer loose cables moving), which provides greater robustness by preventing damage and wear due to movement. Additionally, the logistics are simplified, since the entire assembly is shipped in a single piece from the factory. Furthermore, an improvement in product sustainability is provided, as well as a reduction in CO₂ and environmental impact. Specifically, because it is the most compact product, transportation is optimised, both in mass and volume, such that the transportation of the compactly assembled components is less polluting than the transportation of the different elements separately. Additionally, sending the assembled product in a single package, instead of in several packages, facilitates the assembly and calibration tasks at the destination, reducing the number of steps and improving the safety and ergonomics of the operators, since the entire assembly can be handled and positioned on the solar tracker structure by machinery as a single entity, reducing or eliminating the need for repetitive loading movements by operators.

The main application of the drive object of the invention is as a motion actuator and position controller for solar trackers, in particular, photovoltaic solar trackers, although its application could be extended to other fields of the solar energy sector such as, for example, concentrator solar trackers and future tracker designs for the residential or commercial and industrial solar market.

### Brief description of the figures

The above-mentioned advantages, as well as other advantages and features of the present invention, will be better understood with reference to the following detailed description of preferred embodiments with reference to the attached figures, which must be considered by way of illustration and not limitation, and in which:
Figure 1 shows a perspective view of a drive of the invention connected to a torsion shaft of a solar tracker.
Figure 2 shows a cross-sectional view of the drive of figure 1.

### List of references:

- 1: Drive
- 2: Casing
- 3: Motor
- 4: Reduction system
- 5: Wall
- 6: Power supply / Batteries
- 7: Torsion element / Torsion tube
- 8: Crown
- 9: Worm screw
- 10: Electronics
- 11: First compartment
- 12: Second compartment
- 13: Third compartment

### Detailed description of a preferred exemplary embodiment of the invention

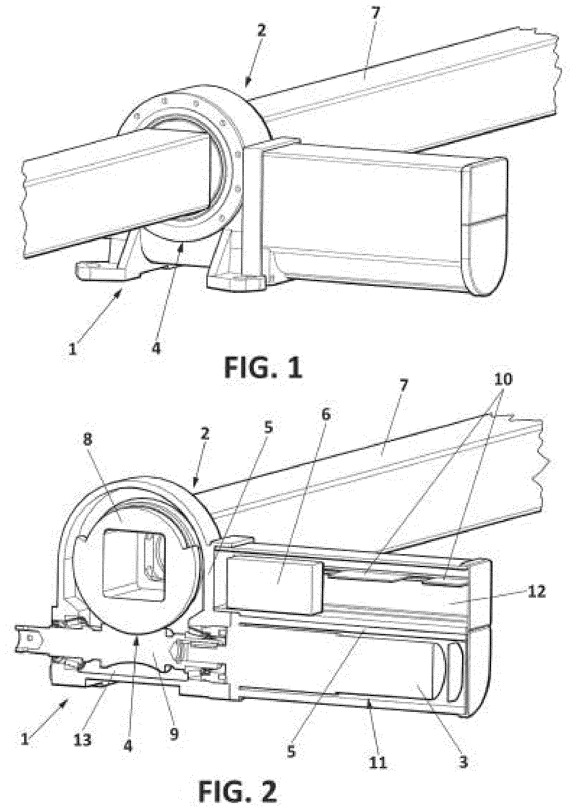

With the help of the aforementioned attached figures 1-2, a detailed description of a preferred exemplary embodiment of the drive (1) for the solar tracker that is the object of the present invention is provided below.

The drive (1) includes a casing (2) that houses and ensures, when necessary, the level of leak-tightness required to protect the following components: motor (3); reduction system (4); electronics (10); and in certain cases electrical power supply (6), such as batteries (6), for example, rechargeable, or another type of energy source. Furthermore, the casing (2) can be configured such that it forms a single compartment therein, or on the contrary, it is divided into two or more compartments (11, 12, 13), as will be explained later. In relation to leak-tightness: in general, the casing (2) and, in particular, the compartments (11, 12, 13), prevent fluids, for example, water, and unwanted external agents, such as dust, dirt, etc., from entering therein.

The reduction system (4) comprises an input and an output. The input is connected to the motor (3), to drive the reduction system (4), while the output is connected to a torsion element (7) of the solar tracker, which allows the rotation of the drive to be transmitted and external loads, mainly wind, transmitted by the environment to the solar tracker to be withstood. This torque element (7) can be, for example, a torque tube (7), a torque box (not shown), or equivalent element, as is conventional. In the example represented in the figures, the reduction system (4) includes a reduction gear, such as a crown (8) and worm screw (9) type, although it may be of other types, such as planetary, etc. In this example, therefore, the motor (3) is connected to the worm screw (9), as an input to the reduction system (4), while, as an output, the crown gear (8) is connected to the torsion element (7). The electronics (10) may include, as usual, control elements, such as control electronics, and power elements, such as power electronics, among others, which may be integrated together on a single PCB (not shown) or, as shown in the figures, in different separate elements, such that they are located sharing space in the same compartment (11, 12, 13) of the casing (2) or distributed across different compartments (11, 12, 13).

Related to the electronics, in particular to the control elements, the drive (1) may have components that act as a positioning system, which when in communication with the electronics (10), allows the angular position of the tracker to be measured and controlled. Various solutions can be adopted for the positioning system. In the present embodiment, it is preferred that the positioning system be coupled (or be couplable) to rotating elements, such as: the motor (3), the reduction system (4), or the torsion element (7) of the tracker itself wherein the drive (1) of the invention is intended to be installed. More specifically, the rotating system may include, for example, a referencing element, such as an encoder (not shown) or, more simply, a Hall effect sensor, linked to the motor (3) or the reduction system (4), or to the torsion element, without the need to install external components in moving parts of the tracker; although, due to the high reduction ratio provided by the reduction system (4), an especially precise encoder solution, or similar element, is not required meaning that the referencing element can be of low resolution. To achieve the same effect, there may also be one or more accelerometers (not shown), located in the reduction system (4) or in the torsion element (7).

In order to mitigate to the extent possible the effects of electromagnetic interaction between the elements housed in the casing (2), especially the interaction of the motor (3) with elements such as the power supply (6) and the electronics (10), the invention provides various solutions, focused on both the configuration and the arrangement of the affected elements. On the one hand, it is intended that the electronics (10), in particular, the control, power, communications electronics, etc., can be configured to be protected against electromagnetic noise generated by the motor (3). Specifically, the electronics (10) may include protective elements, such as one or more capacitors (not shown). On the other hand, it is also intended that the affected elements, for example, the electronics (10) and the motor (3), can be in opposite arrangements of the casing (2), or even that the casing (2) is compartmentalised, such that, for example, the motor (3) occupies a first compartment (11) of the casing (2), separated from a second compartment (12) in which the electronics (10) are completely or partially located, preferably together with the power supply (6), as well as the reduction system (4), is located in a third compartment (13), allowing the motor (3) to be coupled to the input of the reduction system (4).

In light of the above, it can be seen in the figures that the first compartment (11), the second compartment (12) and/or the third compartment (13) are separated by one or several walls (5) that allow spaces to be separated and in addition, provide leak-tightness to each compartment (11, 12, 13) if required. Likewise, these walls (5) enable the different compartments (11, 12, 13) to be thermally isolated from internal heat sources, such as, for example, the motor (3) and the electronics (10) when they operate at maximum power regime, in addition to mitigating the electromagnetic noise produced by the motor (3) on the electronics (10) while it is being operated. It can also be seen that the electronic elements (10) most susceptible to interference are arranged in an area of the second compartment (12) that is opposite to the first compartment (11), such that they are as far away as possible from the motor (3). Furthermore, it must be noted that connection points or openings may be found in the walls (5) that constitute the different compartments (11, 12, 13) to, for example, allow the passage of installations such as cables (not shown). In the same way, the first compartment (11) and the third compartment (13) are configured in such a way that they allow the connection between the motor (3) and the reduction system (4) without losing previously mentioned features such as leak-tightness.

Furthermore, the casing (2) in general and, more particularly, the compartments (11, 12, 13), can incorporate thermal insulation (not shown) to maintain the drive (1) within predetermined temperature ranges, thus preventing temperatures that, whether cold or hot, could damage the components housed in the casing (2) and in the compartments (11, 12, 13).

## Claims

1. A drive (1) for a solar tracker **characterised in that** it comprises a casing (2) in which the following elements are housed:
- motor (3);
- reduction system (4), with an input, coupled to the motor (3), and an output connectable to a torsion element (7) of a solar tracker or mechanical transmission element; and
- electronics (10).

2. The drive (1) for a solar tracker according to claim 1, wherein the electronics (10) include control elements and/or power elements integrated in the casing (2).

3. The drive (1) for a solar tracker according to any of claims 1 or 2, which additionally includes a positioning system, in communication with the electronics (10), in order to measure and/or control the angular position of the solar tracker.

4. The drive (1) for a solar tracker according to claim 3, wherein the positioning system comprises any of:
- a referencing element, such as an encoder or, more simply, a Hall effect sensor, which is coupled, or is couplable, to a rotating component, such as the motor (3), the reduction system (4) or the torsion element (7); and
- one or more accelerometers for being located in one or more rotating components, such as, for example, the reduction system (4) or the torsion element (7).

5. The drive (1) for a solar tracker according to any of claims 1 to 4, wherein the reduction system (4) includes a reduction gear such as a crown (8) and worm screw (9) type.

6. The drive (1) for a solar tracker according to any of claims 1 to 5, wherein the casing (2) is compartmentalised into one or more compartments (11, 12, 13), which are in turn totally or partially delimited by means of one or more walls (5).

7. The drive (1) for a solar tracker according to any of claims 1 to 6, wherein the casing (2), or at least one of the compartments (11, 12, 13), are leak tight, in order to prevent fluids, for example, water, or unwanted external agents such as dust from entering therein.

8. The drive (1) for a solar tracker according to any of claims 6 or 7, wherein the electronics (10) are arranged in the compartments (11, 12, 13) in such a way that the electromagnetic interference generated by the motor (3) is reduced.

9. The drive (1) for a solar tracker according to claim 6, wherein the casing (2) comprises: a first compartment (11), in which the motor (3) is housed; and a second compartment (12), in which the electronics (10) are completely or partially housed, preferably together with the power supply (6).

10. The drive (1) for a solar tracker according to claim 9, wherein the casing (2) further comprises a third compartment (13) which houses the reduction system (4), and which allows the input of the reduction system (4) to be coupled to the motor (3).

11. The drive (1) for a solar tracker according to any of claims 6 to 10, wherein the electronics (10) are distributed across several of the compartments (11, 12, 13).

12. The drive (1) for a solar tracker according to any of claims 1 to 11, wherein at least one of the compartments (11, 12, 13), or the casing (2), incorporate thermal insulation elements to maintain the casing (2) within a predetermined temperature range.
